Europäisches Patentamt

European Patent Office

Office européen des brevets

(11) Numéro de publication: **0 149 372**
**B1**

(12) **FASCICULE DE BREVET EUROPEEN**

(45) Date de publication du fascicule du brevet:
**01.06.88**

(21) Numéro de dépôt: **84402059.4**

(22) Date de dépôt: **12.10.84**

(51) Int. Cl.⁴: **H 02 H 1/06,** H 02 H 3/253

(54) Dispositif différentiel résiduel equipe d'un dispositif de surveillance de la source d'alimentation de l'électronique.

(30) Priorité: **24.10.83 FR 8317037**

(43) Date de publication de la demande:
**24.07.85 Bulletin 85/30**

(45) Mention de la délivrance du brevet:
**01.06.88 Bulletin 88/22**

(84) Etats contractants désignés:
**AT BE CH DE GB IT LI NL SE**

(56) Documents cités:
**DE - A - 2 653 453**
**FR - A - 2 445 050**
**US - A - 3 001 100**
**US - A - 4 068 276**

(73) Titulaire: **MERLIN GERIN, Rue Henri Tarze,**
**F-38050 Grenoble Cédex (FR)**

(72) Inventeur: **Bonniau, Michel, 12, rue du Creux au Fer,**
**F-71100 Lux (FR)**
Inventeur: **Paupert, Marc, 32, rue du 56ème R. I.,**
**F-71100 Chalon (FR)**

(74) Mandataire: **Kern, Paul, Merlin Gerin Sce. Brevets 20, rue**
**Henri Tarze, F-38050 Grenoble Cédex (FR)**

## Description

L'invention est relative à un dispositif selon le préambule de la revendication 1.

L'électronique des dispositifs différentiels résiduels nécessite pour fonctionner une certaine énergie et on distingue les dispositifs différentiels dits à «propre courant», dans lesquels l'énergie est empruntée au courant de défaut lui-même et les dispositifs à source auxiliaire dans lesquels l'énergie est fournie par une source indépendante ou par le réseau électrique contrôlé. Les dispositifs différentiels à propre courant assurent une sécurité totale, l'alimentation étant automatiquement disponible en cas de défaut. On connaît deux types de dispositifs à source auxiliaire. Dans le premier type la sécurité du dispositif est assurée par un système de déclenchement automatique en cas de manque de tension de la source. Ces dispositifs connus, ne pouvant se réenclencher seuls en cas de réapparition de la source auxiliaire, présentent l'inconvénient de ne pas assurer la continuité de service, ce qui est souvent inacceptable, notamment pour les appareils montés en tableaux. Dans le second type, la sécurité n'est obtenue que si la continuité électrique de tous les conducteurs de la source auxiliaire est assurée. En effet, si l'on considère un circuit monophasé, en cas de coupure du conducteur neutre, l'alimentaion de la source auxiliaire et en même temps la sécurité de fonctionnement ne sont plus assurées alors que le risque de défaut sur le conducteur phase subsiste. Pour pallier cet inconvénient il a déjà été proposé de doubler ou de multiplier les sources d'alimentation et notamment dans le dispositif du type susmentionné dans lequel l'énergie est fournie par le réseau électrique contrôlé de faire appel à plusieurs conducteurs d'alimentation, notamment de phase et de neutre et éventuellement de terre. Les risques de défaillances sont ainsi notablement réduits, mais une situation dangereuse peut se présenter si l'une ou plusieurs des sources sont défaillantes et que l'installation fonctionne avec une seule source d'alimentation pouvant elle-même tomber en défaut.

Le document US–A–4 068 276 décrit un dispositif de protection différentielle à courant résiduel selon le préambule de la revendication 1, dans lequel un dispositif de surveillance de la source d'alimentation entraîne automatiquement un déclenchement dès qu'une défaillance est détectée, conduisant de ce fait à une mise hors circuit du dispositif même lorsqu'une telle défaillance ne conduit pas à une situation dangereuse.

La présente invention a pour but de remédier à cet inconvénient et de permettre la réalisation d'un dispositif de protection différentielle à courant résiduel qui tout en procurant une sécurité totale, évite les déclenchements non indispensables.

Ce but est atteint par la mise en œuvre des particularités mentionnées dans la partie caractéristique de la revendication 1. Grâce à l'invention, la défaillance ou coupure de l'un quelconque des conducteurs de phase est immédiatement signalée et le dispositif de protection différentielle reste en fonction tant qu'il subsiste deux sources d'alimentation distinctes, le déclenchement intervenant en cas de défaillance de l'une quelconque de ces deux sources, ce qui évite toute situation dangereuse et tout risque de non déclenchement par non-alimentation de l'électronique du dispositif différentiel.

Selon un développement de l'invention, la coupure d'un conducteur de phase est détectée par l'absence de tension sur ce conducteur, tandis que la coupure du conducteur neutre est signalé par une montée en tension de ce conducteur. La signalisation est avantageusement réalisée par des diodes luminescentes indiquant le conducteur défaillant.

D'autres avantages et caractéristiques de l'invention ressortiront plus clairement de la description qui va suivre de différents modes de mise en œuvre, donnés à titre d'exemples non limitatifs et représentés aux dessins annexés, dans lesquels:

– la figure 1 est le schéma synoptique d'un dispositif déclencheur différentiel associé à un appareil de coupure de courant;

– la figure 2 est le schéma électrique des blocs détecteurs d'anomalies et visualisation des anomalies selon la fig. 1;

– les figures 3 et 4 sont des schémas électriques analogues à celui de la fig. 2, d'une alimentation bipolaire et d'une alimentation tétrapolaire.

Sur les figures, un disjoncteur tripolaire 10 comprend des contacts 12 de coupure de trois conducteurs de phase 14, 16, 18. Les contacts 12 sont commandés par une serrure 20 pilotée par un relais de déclenchement 22. Au disjoncteur 10 est associé un dispositif différentiel résiduel, représenté par le repère général 24, et comprenant un capteur en forme de tore 26 entourant les trois conducteurs 14, 16, 18 et portant un enroulement secondaire 28 relié à un bloc comparateur 30. Le bloc comparateur 30 transmet un signal à la logique de déclenchement 32 lorsque le signal fourni par l'enroulement secondaire 28, qui représente un courant différentiel résiduel, dépasse un seuil prédéterminé. La logique de déclenchement 32 actionne le relais 22 provoquant l'ouverture des contacts 12 et l'interruption du courant.

L'électronique du dispositif différentiel résiduel 24 est alimenté en courant par un bloc d'alimentation 34 relié aux trois conducteurs de phase 14, 16, 18. De tels dispositifs différentiels sont bien connus des spécialistes et il est inutile de les décrire plus en détail.

Le dispositif différentiel résiduel 24 comporte un détecteur d'anomalies d'alimentation 36, qui émet un signal d'anomalie en cas de défaillance de l'une des sources d'alimentation 34, notamment lors dune coupure de l'un des conducteurs de phase 14, 16, 18. Le signal émis par le détecteur d'anomalies d'alimentation 36 est transmis d'une part à un bloc de visualisation 38, et d'autre part, à la logique de déclenchement pour d'une part signaler l'anomalie et d'autre part provoquer le déclenchement du disjoncteur 10.

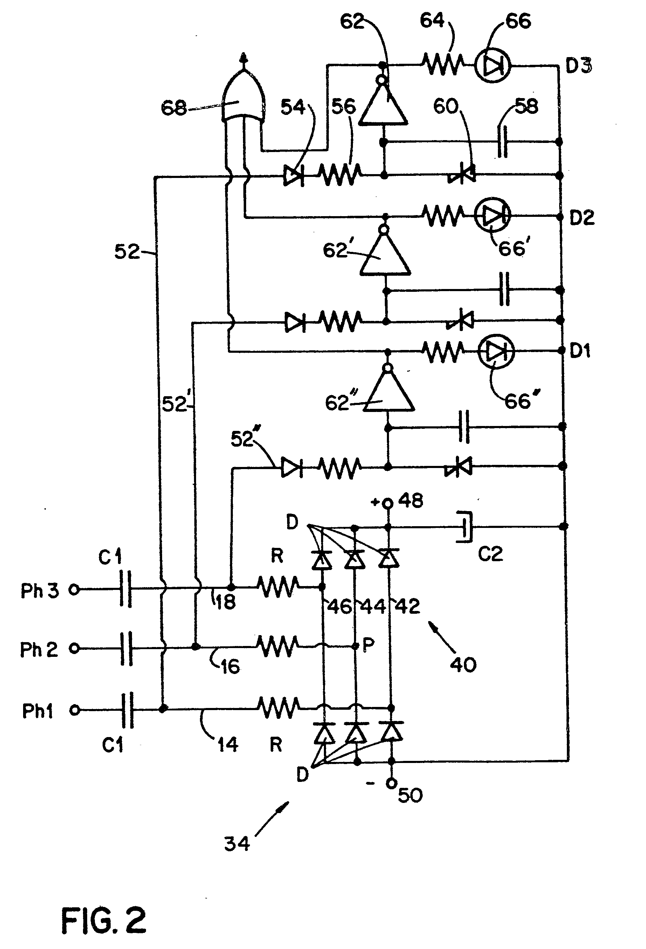

En se référant plus particulièrement à la figure 2, qui représente les blocs alimentation 34, détecteur d'anomalies 36 et visualisation 38, on voit que le bloc alimentation 34 comporte un pont de diodes 40 à trois branches 42, 44, 46, comprenant chacune deux diodes D conduisant alternativement et dont le point de liaison est relié respectivement aux conducteurs de phase 14, 16, 18 par l'intermédiaire d'une résistance R et d'une capacité $C_1$. Le courant d'alimentation de l'électronique est prélevé aux bornes 48, 50 de sortie du pont 40, une capacité $C_2$ de filtrage reliant les bornes 48, 50. Au conducteur 14 de la phase 1 est connecté un circuit 52 détecteur de tension constitué par une diode 54, une résistance 56 et une capacité 58 shuntée par une diode Zener 60, connectées électriquement en série. L'entrée d'un inverseur 62 est relié au point de jonction de la résistance 56 et de la capacité 58, tandis que la sortie de l'inverseur 62 est reliée par l'intermédiaire d'une résistance 64 à une diode luminescente 66, et d'autre part à l'une des entrées d'une porte OU 68. D'une manière identique les conducteurs de phase 16, 18 sont chacun reliés à un circuit détecteur d'anomalies 52', 52" dont les inverseurs 62', 62" sont reliés d'une part à des diodes électroluminescentes 66', 66", et d'autre part aux deux autres entrées de la porte 68.

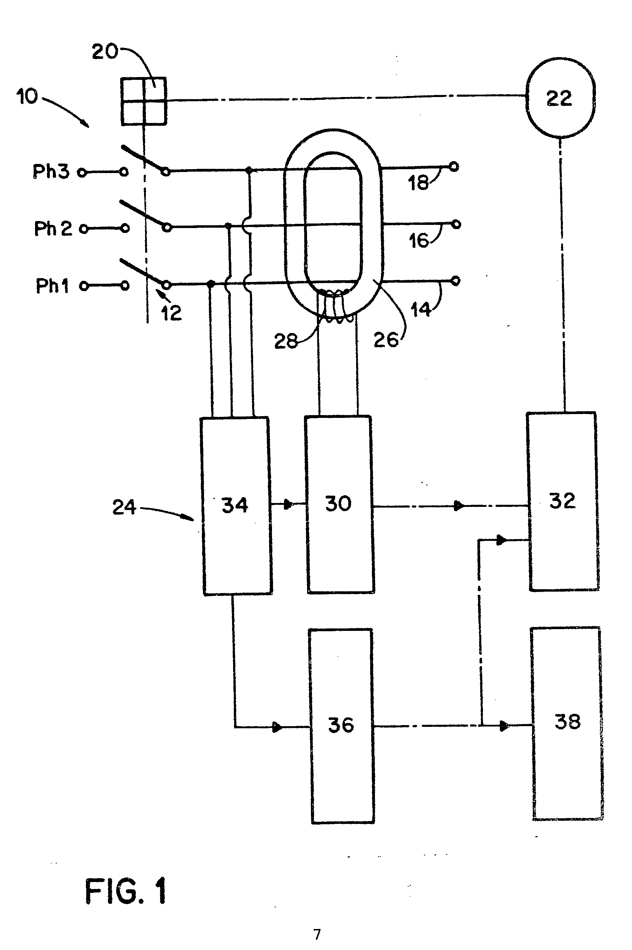

Le dispositif différentiel résiduel selon les figures 1 et 2 fonctionne de la manière suivante:

Lorsque les trois conducteurs de phase 14, 16, 18 sont parcourus par des courants dont la somme vectorielle est nulle, l'enroulement secondaire 28 délivre un signal de valeur zéro, et le disjoncteur 10 reste fermé. L'alimentation de l'électronique est dérivée des trois conducteurs 14, 16, 18 par le pont de diodes 40. La tension alternative présente sur le conducteur 14 est transmise par le circuit 52 à l'entrée de l'inverseur 62 après redressement par la diode 54. La présence d'un signal de tension à l'entrée du bloc inverseur 62 se traduit par un signal nul à la sortie transmis à la porte 68. La diode électroluminescente 66 n'est pas excitée. D'une manière identique la présence de tension sur des conducteurs de phase 16, 18 se traduit par des signaux nuls aux entrées de la porte 68 et par l'extinction des diodes électroluminescentes 66', 66". L'appareil est prêt à fonctionner et lors de l'apparition d'un défaut différentiel le disjoncteur 10 déclenche de la manière usuelle.

Lors d'une coupure de l'un des conducteurs de phase, par exemple du conducteur 14, le pont 40 reste alimenté par les deux autres conducteurs de phase 16, 18, qui fournissent l'énergie d'alimentation de l'électronique. Le dispositif différentiel résiduel alimenté normalement est prêt à fonctionner en cas d'apparition d'un défaut différentiel résiduel de la manière précitée. La disparation de la tension sur le conducteur de phase 14 coupé fait apparaître à l'entrée de l'inverseur 62 un signal nul se traduisant à la sortie par un signal de niveau 1 appliqué à l'entrée de la porte 68 et à la diode électroluminescente 66. Cette dernière diode 66 s'allume pour signaler l'absence de tension sur le conducteur 14, tandis que la porte 68 transmet à la logique de déclenchement 32 un signal de déclenchement provoquant l'averture du disjoncteur 10. Le déclenchement peut être différé puisque l'appareil reste alimenté normalement et assure pleinement la protection différentielle. La sécurité n'est toutefois plus absolue en ce sens qu'une défaillance ou coupure de l'un des deux autres conducteurs 16, 18 ferait disparaître la seule source d'alimentation disponible en empêchant le fonctionnement du dispositif différentiel résiduel. La diode luminescente 66 indique la coupure du conducteur de phase 14 et en cas de déclenchement différé la situation précaire de l'appareil. Les circuits 52', 52" indiquent d'une manière identique une absence de tension et de ce fait une coupure des conducteurs 16, 18. Toute défaillance de l'alimentation de l'électronique étant évitée le dispositif différentiel assure une sécurité absolue. Dans le cas d'une coupure simultanée des trois conducteurs d'alimentation, le risque de défaut n'existe plus; le dispositif n'entraîne pas le déclenchement de l'appareil, la continuité de service est donc assurée automatiquement dès la réapparition de l'alimentation.

Le schéma selon la figure 2 est bien entendu un schéma de principe pouvant être réalisé d'une manière différente, et le spécialiste comprendra les fonctions des éléments non décrits en détail, notamment du condensateur 58 de lissage du signal de tension pulsé appliqué à l'entrée de l'inverseur 62 et de la diode Zener 60 de protection de surtension.

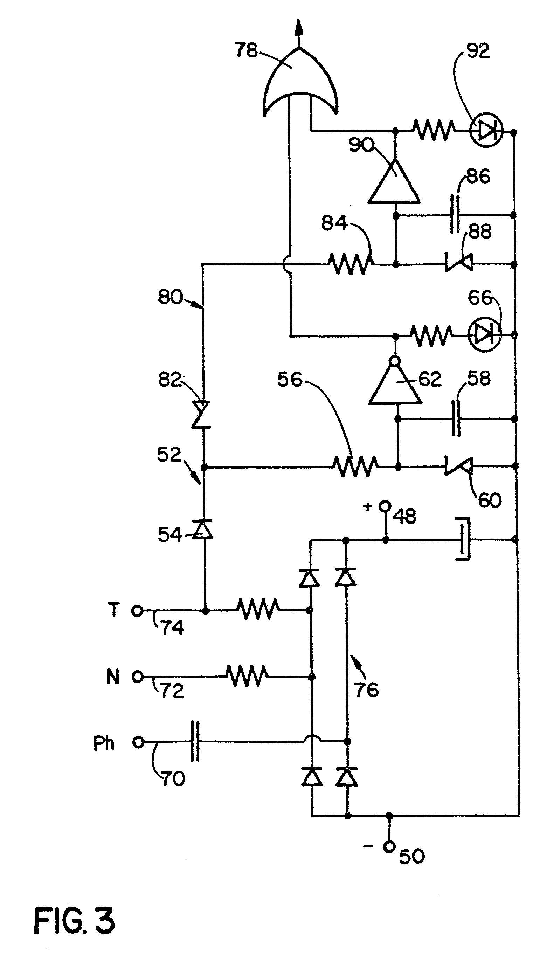

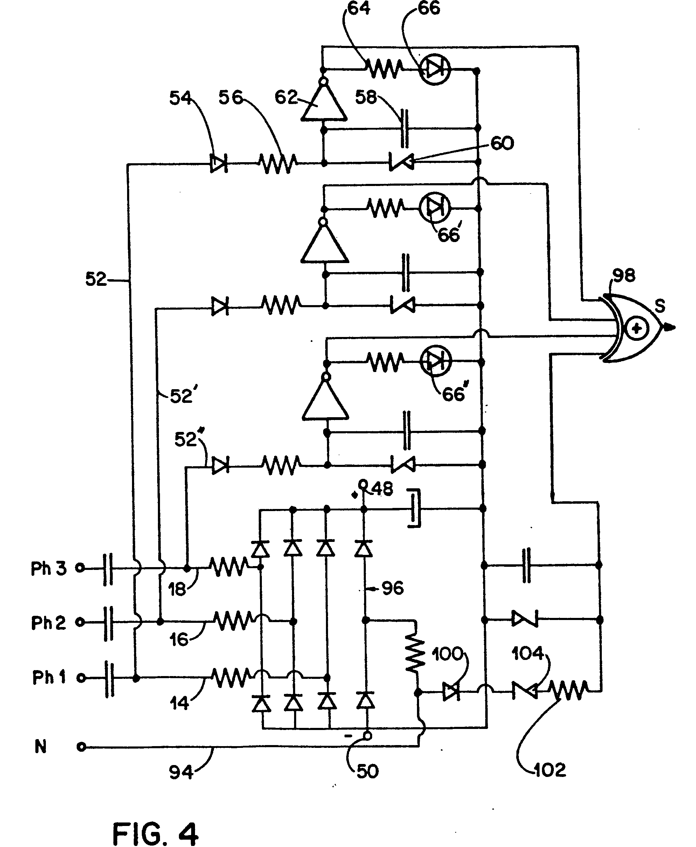

Les figures 3 et 4 illustrent deux autres modes de réalisation d'un dispositif différentiel résiduel, les mêmes numéros de repère étant utilisés pour désigner des élements identiques ou analogues à ceux de la figure 2. La figure 3 représente un appareil bipolaire utilisant le conducteur de phase 70, le conducteur neutre 72 et le conducteur de terre 74 raccordé à un pont de diodes 76 à deux branches, les conducteurs neutre 72 et de terre 74 étant raccordés à la même branche par l'intermédiaire de résistances pour réaliser l'alimentation de l'électronique à partir des bornes de sortie 48, 50 du pont 76. Au conducteur de terre 74 est relié un circuit détecteur 52 comprenant en série la diode 54, la résistance 56 et le condensateur 58, shunté par la diode Zener 60. Un inverseur 62 est relié au point de jonction de la résistance 56 et du condensateur 58 et sa sortie est reliée à la diode luminescente 66 et à l'une des entrées d'une porte OU 78. A la sortie de la diode 54 est relié un circuit de détection 80 comprenant en série une diode Zener 82, une résistance 84 et un condensateur 86, shunté par une diode Zener 88. L'entrée d'un amplificateur 90 est reliée au point de jonction de la résistance 84 et du condensateur 86, tandis que la sortie de l'amplificateur 90 est reliée d'une part à la deuxième entrée de la porte OU 78 et d'autre part à une diode électroluminescente 92. La sortie de la porte OU 78 est reliée à la logique de déclenchement 32.

L'appareil selon la figure 3 fonctionne de la manière suivante:

Le pont de diodes 76 est normalement alimenté par les conducteurs de phase 70 et de neutre 72.

La différence de tension présente entre le conducteur de terre 74 et la sortie 50 du pont 76 fait apparaître un signal de tension à l'entrée de l'inverseur 62 qui se traduit par un signal nul à la sortie, la diode électroluminescente 66 restant éteinte. Cette différence de tension est inférieure au seuil de la diode Zener 82 et la diode électroluminescente 92 est également éteinte.

Une coupure du conducteur de phase 70 interrompt l'alimentation de l'électronique du dispositif différentiel résiduel qui est alors incapable de fonctionner. Cette situation n'est pas dangereuse, aucun des conducteurs étant sous tension.

Une coupure du conducteur de terre 74 n'affecte pas l'alimentation du pont de diodes 76 qui reste normalement alimenté par les conducteurs phase 70 et neutre 72. La coupure du conducteur de terre 74 se traduit de la manière décrite ci-dessus par l'allumage de la diode électroluminescente 66 et l'émission d'un signal de déclenchement par la porte 78.

Une coupure du conducteur 72 de neutre n'affecte pas l'alimentation du pont de diodes 76 relié aux conducteurs sains 70 de phase et 74 de terre. Cette coupure du conducteur 72 s'accompagne d'une dérivation du courant par le conducteur de terre 74, d'une augmentation de la tension qui dépasse le seuil de la diode Zener 82 et de l'application d'un signal à la diode électroluminescente 92 et à la porte OU 78, qui provoque le déclenchement de l'appareil. Il est bien entendu possible de différer également le déclenchement pour permettre à l'opérateur d'intervenir lors d'une signalisation de défaut par allumage de l'une des diodes électroluminescentes 66, 92.

La figure 4 montre le schéma d'un appareil tétrapolaire à trois conducteurs de phase 14, 16, 18 et à conducteur de neutre 94. Les quatre conducteurs 14, 16, 18, 94 sont reliés de la manière susmentionnée, chacun à l'une des branches d'un pont de diodes 96 à quatre branches pour faire apparaître la tension d'alimentation auc bornes 48, 50 de sortie du pont 96. Les trois conducteurs de phase 14, 16, 18 sont reliés chacun à un circuit détecteur de présence de tension 52, 52', 52'' décrit en détail ci-dessus en référence à la figure 2. Les signaux des circuits 52, 52', 52'' sont appliqués aux diodes électroluminescentes 66, 66', 66'' et aux entrées d'une porte OU exclusive 98 à quatre entrées. Le conducteur de neutre 94 est relié par une diode 100, und diode Zener 104 et une résistance 102 en série à la quatrième entrée de la porte OU. La sortie de la porte OU 98 est reliée à la logique de déclenchement 32. En fonctionnement normal les trois conducteurs de phase 14, 16, 18 sont sous tension et aucun signal n'est appliqué à la porte 98 ou aux diodes électroluminescentes 66, 66', 66''. L'absence de tension sur le conducteur 94 neutre se traduit par un signal nul appliqué à la quatrième entrée de la porte OU 98. Les signaux appliqués aux quatre entrées de la porte 98 étant tous nuls cette dernière ne transmet pas de signal vers la logique de déclenchement. Il convient de noter que la porte 98 du type OU exclusif émet un signal si le nombre de signaux 1 appliqués sur ces entrées est impair. Une coupure du conducteur neutre n'affecte pas l'alimentation du pont de diodes 96 qui est assurée par les trois conducteurs phase 14, 16 et 18. Cette coupure ne modifie pas notablement le potentiel de l'anode de la diode 100, la porte 98 ne délivre donc pas de signal de déclenchement puisque toutes ses entrées sont à zéro.

Une coupure supplémentaire d'un des conducteurs de phase, par exemple le conducteur 14 de la phase 1, provoque suivant le processus déjà décrit précédemment l'allumage de la diode électroluminescente 66 et applique un premier signal 1 sur la porte 98, cette dernière donnant alors l'ordre de déclencher avec un retard éventuel.

Dans le cas où un seul conducteur phase serait coupé, par exemple le conducteur 14 de la phase 1, comme précédemment, la diode 66 serait allumée, et un signal 1 serait appliqué à la porte 98, mais simultanément on observe une montée en potentiel du conducteur neutre qui provoque l'application d'un second signal 1 sur la porte 98. Dans ce cas le nombre de 1 sur les entrées de la porte 98 étant pair, cette dernière ne donne pas d'ordre de déclenchement.

Une coupure supplémentaire d'un second conducteur phase entraînerait l'application d'un troisième 1 sur les entrées de la porte 98 ce qui provoquerait le déclenchement avec ou sans retard. Dans cette éventualité, l'alimentation ne serait plus assurée que par la 3ème phase et le neutre. Sans détecter ni signaler la seule coupure du conducteur neutre, ce dispositif permet donc d'assurer comme les précédents la continuité de service jusqu'à la limite admissible qui correspond à la disponibilité d'une seule alimentation.

Dans le cas de l'appareil quadripolaire, le conducteur de terre n'est pas utilisé, la protection étant déjà surabondante, mais il est clair que rien ne s'oppose à cette utilisation.

**Revendications**

1. Dispositif de protection différentielle à courant résiduel destiné à la protection d'un réseau électrique comportant au moins trois conducteurs de phase (14, 16, 18) et un conducteur de neutre (94) et/ou de terre, dispositif comportant une source d'alimentation (34) dérivée de la tension du réseau par un circuit (96) redresseur en pont de diodes connecté aux trois conducteurs de phase et au conducteur de neutre et/ou de terre du réseau, un dispositif (36) de surveillance de ladite source comportant des détecteurs (52, 52', 52'', 100, 102, 104) de tension dont les sorties sont reliées à un circuit (98) de commande destiné à produire un signal de déclenchement à la bobine (22) de déclenchement, alimentée par ladite source (34), de l'appareil de coupure (10) du dispositif, dispositif caractérisé en ce qu'il comprend un détecteur de tension distinet pour chaque conducteur de phase et pour le conducteur de neutre et/ou de terre, chaque détecteur de tension produisant un signal de sortie en cas d'anomalie de tension sur le conducteur correspondant, et en ce que les détecteurs de tenision (52, 52', 52") associés aux conducteurs de phase sont connectés à un circuit de signalisation (66, 66', 66") qui produit un signal d'alarme lorsqu'au moins un des conducteurs de phase est coupé, le circuit de commande (98) produisant un signal de déclenchement lorsque ladite source (34) est connectée à moins de trois conducteurs sains du réseau.

2. Dispositif selon la revendication 1, caractérisé en ce que ledit circuit de signalisation (66, 66', 66") signale l'absence de tension sur l'un des conducteurs de phase (14, 16, 18) du réseau.

3. Dispositif selon l'une des revendications 1 et 2, caractérisé en ce que chaque détecteur de tension (52, 52', 52") connecté à un conducteur de phase comporte un inverseur (62) émettant un signal lors de la disparition du signal de tension sur le conducteur correspondant (14, 16, 18).

4. Dispositif selon l'une quelconque des revendications précédentes, caractérisé en ce que ledit signal d'alarme est un signal lumineux, le circuit de signalisation comportant une diode électro-luminescente (66, 66', 66") commandée par le signal de sortie de chaque détecteur de tension (52, 52', 52") connecté à un conducteur de phase (14, 16, 18).

5. Dispositif selon l'une quelconque des revendications précédentes, caractérisé en ce que les détecteurs de tension (52, 52', 52") associés aux conducteurs de phase (14, 16, 18) produisent chacun un signal logique lorsque la tension disparaît sur le conducteur de phase correspondant, le detecteur de tension associé au conducteur de neutre (94), produisant un signal logique lorsque la tension sur ledit conducteur de neutre n'est pas nulle, lesdits signaux logiques étant appliqués à une porte logique du type ou exclusif produisant ledit signal de déclenchement lorsqu'un nombre impair de signaux lui est appliqué.

## Patentansprüche

1. Residualstrom-Differentialschutzvorrichtung zum Schutz eines elektrischen Stromnetzes mit mindestens drei Phasenleitern (14, 16, 18) und einem Nulleiter (94) und/oder Erdleiter des Netzes, Vorrichtung, die eine Speisequelle (34) aufweist, die von der Netzspannung abgeleitet ist durch eine Diodenbrücke-Gleichrichter-Schaltung, die mit den drei Phasenleitern und dem Null- und/oder Erdleiter des Netzes verbunden ist, eine Überwachungsvorrichtung (36) der genannten Speisequelle, die Spannungsdetektoren (52, 52', 52", 100, 102, 104) aufweist, deren Ausgänge mit einem Steuerkreis (98) verbunden sind, der dazu bestimmt ist, ein Auslösesignal an der Auslösespule (22) zu erzeugen, die von der genannten Quelle (34) des Trenngerätes (10) der Vorrichtung gespeist wird, Vorrichtung, dadurch gekennzeichnet, dass sie für jeden Phasenleiter und Nulleiter und/oder Erdleiter einen unterschiedlichen Spannungsdetektor aufweist, wobei jeder Spannungsdetektor im Falle einer Spannungs-Anomalie auf dem entsprechenden Leiter ein Ausgangssignal erzeugt, und dass die mit den Phanseleitern verbundenen Spannungsdetektoren (52, 52', 52") mit einem Signalkreis (66, 66', 66") verbunden sind, der ein Alarmsignal erzeugt, wenn wenigstens einer der Phasenleiter unterbrochen ist, wobei der Steuerkreis (98) ein Auslösesignal erzeugt, wenn die genannte Quelle (34) mit weniger als drei gesunden Leitern des Stromnetzes verbunden ist.

2. Vorrichtung gemäss Anspruch 1, dadurch gekennzeichnet, dass der genannte Signalkreis (66, 66', 66") die Abwesenheit der Spannung auf einem der Phasenleiter (14, 16, 18) des Stromnetzes anzeigt.

3. Vorrichtung gemäss einem der Ansprüche 1 und 2, dadurch gekennzeichnet, dass jeder mit einem Phasenleiter verbundene Spannungsdetektor (52, 52', 52") einen Wechsler (62) aufweist, der bei Verschwinden des Spannungssignals auf dem entsprechenden Leiter (14, 16, 18) ein Signal aussendet.

4. Vorrichtung gemäss irgendeinem der vorhergehenden Ansprüche, dadurch gekennzeichnet, dass das genannte Alarmsignal ein Lichtsignal ist, wobei der Signalkreis eine elektro-lumineszierende Diode (66, 66', 66") aufweist, die von dem Ausgangssignal jedes mit einem Phasenleiter (14, 16, 18) verbundenden Spannungsdetektors (52, 52', 52") gesteuert wird.

5. Vorrichtung gemäss irgendeinem der vorhergehenden Ansprüche, dadurch gekennzeichnet, dass die mit den Phasenleitern (14, 16, 18) verbundenen Spannungsdetektoren (52, 52', 52") ein logisches Signal erzeugen, wenn die Spannung auf dem entsprechenden Phasenleiter verschwindet, wobei der mit dem Nulleiter (94) verbundene Spannungsdetektor ein logisches Signal erzeugt, wenn die Spannung auf dem genannten Nulleiter nicht null ist, und wobei die genannten logischen Signale an eine logische Pforte des Typs «exklusiv oder» angelegt werden und das genannte Auslösesignal erzeugen, wenn eine ungerade Anzahl von Signalen angelegt wird.

## Claims

1. A residual current differential protection device for the protection of an electric system comprising al least three phase conductors (14, 16, 18) and a neutral conductor (94) and/or ground conductor, device comprising a supply source (34) derived from the system voltage by a diode bridge rectifier circuit (96) connected to the three phase conductors and to the neutral and/or ground conductor of the system, a device for the surveillance (36) of said source comprising voltage detectors (52, 52', 52", 100, 102, 104) the outputs of which are connected to a control circuit (98) for developing a trip signal at the trip coil, supplied by said source (34) of the breaking apparatus (10) of the device, device characterized in that it comprises a different voltage detector for each phase conductor and for the neutral and/or ground conductor, each voltage conductor developing an output signal when there is an anomaly voltage on the corresponding conductor, and in that the voltage detectors (52, 52', 52") associated with the phase conductors are connected to a signalling circuit (66, 66', 66") which develops an alarm signal when at least one of the phase conductors is interrupted, the control circuit (98) developing a trip signal when said source (34) is connected to less than three healthy conductors of the system.

2. Device according to claim 1, characterized in that said signalling circuit (66, 66', 66'') indicates the voltage missing on one of the phase conductors (14, 16, 18) of the system.

3. Device according to one of claims 1 and 2, characterized in that said voltage detector (52, 52', 52'') connected to a phase conductor comprises an inverter (62) emitting a signal when the voltage signal disappears on the corresponding conductor (14, 16, 18).

4. Device according to anyone of the preceding claims, characterized in that said alarm signal is a luminous signal, the signalling circuit comprising an electro-luminescent diode (66, 66', 66'') controlled by the output signal of each voltage detector (52, 52', 52'') connected to a phase conductor (14, 16, 18).

5. Device according to anyone of the preceding claims, characterized in that the voltage detectors (52, 52', 52'') associated with the phase conductors (14, 16, 18) develop each a logic signal when the voltage disappears on the corresponding phase conductors, the voltage detector associated with the neutral conductor (94) producing a logic signal when the voltage on said neutral conductor is not zero, said logic signal being applied to a logic gate of the type «or exclusive» producing said tripping signal when an odd number of signals is applied thereto.

FIG. 1

FIG. 2

FIG. 3

FIG. 4